# NEUE EUROPÄISCHE PATENTSCHRIFT

(11) **EP 1 508 488 B2**
(45) Veröffentlichungstag und Bekanntmachung des Hinweises auf die Entscheidung über den Einspruch: **29.07.2009**
(45) Hinweis auf die Patenterteilung: 18.10.2006
(21) Anmeldenummer: 04019344.3
(22) Anmeldetag: 14.08.2004
(51) Int. Cl.: B60T 17/02, B60T 11/32

(54) **Verfahren zum Betreiben einer Druckluftbeschaffungsanlage eines Kraftfahrzeuges sowie Druckluftaufbereitungseinrichtung**
Installation of compressed air production for a vehicle and method of operating the same
Installation de production d'air comprimé pour véhicule et méthode pour le faire fonctionner

(30) Priorität: 20.08.2003 DE 10338162
(43) Veröffentlichungstag der Anmeldung: 23.02.2005
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- EP-A1- 0 496 958
- EP-A1- 0 561 171
- DE-A- 1 208 207
- DE-A- 2 950 904
- DE-A- 4 421 575
- DE-A- 19 515 895
- DE-A1- 2 837 506
- DE-A1- 3 412 979
- DE-A1- 3 514 989
- DE-A1- 3 637 741
- DE-A1- 10 220 791
- DE-A1- 10 333 610
- DE-A1- 19 835 638
- DE-C- 19 544 621
- DE-C- 19 700 243
- DE-C- 19 710 814
- DE-C2- 19 701 059
- US-A- 3 023 765
- ING. (GRAD.) PETER BERG: 'Grundlagen, Systeme und Pläne' DRUCKLUFTANLAGEN FÜR NUTZFAHRZEUGE 1, TECHNISCHE UNTERRICHTUNG (BOSCH) Februar 1998, ROBERT BOSCH GMBH UNTERNEHMENSBEREICH KRAFTFAHRZEUG-AUSRÜSTUNG, ABTEILUNG TECHNISCHE INFORMATION (KH/VDT), STUTTGART,
- 'Grundlehrgang Druckluft-Bremsanlage' WABCO TRAINING JANUAR 2001 Januar 2001, WABCO FAHRZEUGBREMSEN, HANNOVER, Seiten 07/8 - 07/9
- 'Kraftfahrtechnisches Taschenbuch', Bd. 24.AUFL., ROBERT BOSCH GMBH,2002, STUTTGART, ISBN 3528138769 Seiten 750 - 753

## Beschreibung

Die Erfindung bezieht sich auf ein Verfahren zum Betreiben einer Druckluftbeschaffungsanlage eines Kraftfahrzeuges sowie Druckluftaufbereitungseinrichtung mit den in den Oberbegriffen der Ansprüche 1 und 5 angegebenen Merkmalen. Eine Druckluftbeschaffungsanlage weist eine Druckluftaufbereitungseinrichtung und einen Kompressor sowie den einzelnen Verbraucherkreisen zugeordnete Vorratsbehälter für Druckluft bestimmter Druckhöhe auf. Die Druckluftaufbereitungseinrichtung weist einen Druckregler, in der Regel auch einen Lufttrockner, ein Mehrkreisschutzventil und eine Steuerelektronik auf. Je nach Ausführungsform sind diese Teile zu einer gemeinsamen Baueinheit zusammengefügt. Eine solche gemeinsame Baueinheit kann beispielsweise als Druckluftaufbereitungseinrichtung dem Kompressor einer Druckluftbeschaffungseinrichtung nachgeschaltet sein.

### STAND DER TECHNIK

Eine Druckluftaufbereitungseinrichtung der in Rede stehenden Art ist aus der DE 44 21 575 C2 bekannt. Hierbei sind ein Druckregler, ein Lufttrockner, ein Mehrkreisschutzventil und eine Steuerelektronik zu einer gemeinsamen Baueinheit zusammengefügt. Innerhalb der gemeinsamen Baueinheit sind den einzelnen Verbraucherkreisen zugeordnete mechanisch-pneumatische Ventile, insbesondere Überströmventile, Druckbegrenzer, Schaltventile und/oder Rückschlagventile und dgl. vorgesehen. Für die Erfassung der ausgangsseitigen Drücke in den Kreisen I bis IV sind Drucksensoren vorgesehen, deren Signale der Steuerelektronik zugeleitet werden. Alle Kreise werden gleichwertig bzw. gleichrangig behandelt. Die Kreise können durch die Überströmventile mit begrenzter Rückströmung abgesichert sein. Hierbei ist jedem Überströmventil jedes Kreises ein Magnetventil zugeordnet. Das Magnetventil ist in nicht erregtem Zustand offen, d. h. der Federraum des Überströmventils ist mit dem Anströmraum verbunden. Damit besitzt das Überströmventil einen vergleichsweise erhöhten Öffnungsdruck. In erregtem Zustand schaltet das Magnetventil um und entlüftet den Federraum. Damit ist eine Zuhalten der Überströmventile und eine gezieltes Öffnen der Überströmventile durch Freigabe der normalen Funktion eines Überströmventils mit seinen zwei Wirkflächen möglich. Die Absicherung kann aber auch durch vorgesteuerte Rückschlagventile erfolgen, die durch einen über ein Magnetventil zu schaltenden Betätigungskolben aufgestoßen werden können.

An einen fünften Verbraucherkreis V kann die Luftfederung des Fahrzeugs angeschlossen sein. In der Versorgungsleitung zu einem Vorratsbehälter dieses Kreises ist ein Überströmventil mit begrenzter Rückströmung ohne Vorsteuerung angeschlossen. Das Überströmventil ist damit Bestandteil des Mehrkreisschutzventils. Es lässt in seiner Offenstellung einen Luftaustausch mit den übrigen Kreisen zu. Die Luftfederung kann aber auch an den Kreis IV angeschlossen sein, der in Übereinstimmung mit dem Aufbau der Kreise I bis III aufgebaut ist. Der Kreis V wird auch für die Regeneration genutzt. Über eine Steuerelektronik werden alle Kreise gemeinsam je dach dem Luftverbrauch in einem der Kreise gesteuert. Der Druckregler mit dem zugehörigen Auslassventil wird in gleicher Weise gesteuert, unabhängig davon in welchem Kreis ein Luftverbrauch aufgetreten ist. Dies ist unschädlich für die Lebensdauer des Kompressors, solange der Vorratsdruck im Kreis V eine Druckhöhe aufweist, die der Druckhöhe der übrigen Kreise entspricht.

Wenn jedoch die Luftfederung des Kraftfahrzeuges eine vergleichsweise höhere Druckhöhe als z. B. die der Betriebsbremse zugeordneten Kreise I und II erfordert, muss das Überströmventil des Kreises V entsprechend hoch eingestellt werden. Dann aber wird bei jedem Luftverbrauch in den Kreisen I und II durch den zugelassenen Luftaustausch bzw. das Nachfüllen der Kreise I und II aus dem Kreis V heraus sich eine Absenkung der Druckhöhe im Kreis V einstellen, auch wenn im Kreis V kein eigener Luftverbrauch vorliegt, weil der Aufbau des Kraftfahrzeuges während der Fahrt weder gehoben wurde, noch eine Beladung stattgefunden hat. Der Kompressor muss also in jeder Lastlaufphase gegen den sehr hohen, in der Regel maximalen, Druck im Kreis V arbeiten und diesen bereitstellen. Dies verkürzt die Lebensdauer des Kompressors erheblich.

Eine ähnliche Druckluftaufbereitungseinrichtung einer Druckluftbeschaffungsanlage ist auch aus der DE 195 44 621 C1 bekannt. In einem gemeinsamen Gehäuse, welches auch unterteilt ausgebildet sein kann, ist ein Druckregler, ein Lufttrockner, ein Mehrkreisschutzventil und eine Steuerelektronik mit ihren entsprechenden Elementen untergebracht. Das Mehrkreisschutzventil ist für alle Kreise ausgebildet und angeordnet, die von dem Gehäuse abzweigen. Jeder Kreis besitzt ein Überströmventil mit begrenzter Rückströmung. Bei aufgefüllter Anlage stehen die Überströmventile offen, sodass ein Luftaustausch möglich ist. An einen Kreis V kann die Luftfederung angeschlossen sein. Der Kreis V wird auch zur Regeneration des Lufttrockners genutzt. Über den Luftverbrauch wird der Druckregler und damit der Leerlauf/Lastlaufzyklus des Kompressors gesteuert. Es treten dieselben Nachteile, wie oben beschrieben auf.

Eine weitere Druckluftaufbereitungseinrichtung ist aus der DE 197 00 243 C1 bekannt. Hier ist einem Überströmventil ein Druckbegrenzer vor- oder nachgeschaltet, der über ein Magnetventil vorgesteuert wird. Die Druckregelung erfolgt gemeinsam über die Steuerelektronik für alle Kreise.

Die DE 195 15 895 A1 zeigt eine Druckluftaufbereitungseinrichtung mit einem Druckregler, einem Lufttrockner und einem integrierten Mehrkreisschutzventil. In der Füllleitung ist dem Lufttrockner das übliche Rückschlagventil nachgeschaltet, an dem die Zentralbelüftung beginnt, über die die Überströmventile der einzelnen Kreise mit Druckluft versorgt werden. In einer ersten Ausführungsform sind den Überströmventilen vorsteuernde Magnetventile vorgeschaltet. Über Magnetventile können auch den Überströmventilen nachgeschaltete Sperrventile geschalt werden. In einer dritten Ausführungsform können die Überströmventile und die Magnetventile durch über eine Steuerelektronik direkt steuerbare Sperrventile ersetzt sein. In den meisten Kreisen werden die ausgangsseitigen Drücke durch Drucksensoren erfasst, deren Signale an die Steuerelektronik weitergeleitet werden. Damit ist es möglich, druckabhängig auf die Befüllung der einzelnen Kreise Einfluss zu nehmen. Bevorzugte Befüllung ist erreichbar. Zum Füllen des der Luftfederung zugeordneten Kreises V auf einen gegenüber den anderen Kreisen I bis IV erhöhten Druck werden die Überströmventile der anderen Kreise oder die Sperrventile in die Sperrstellung überführt. Durch die an die Kreise I bis V angeschlossenen Verbraucher wird Druckluft in unterschiedlichem Ausmaß verbraucht. Der Kreis V kann von einem Luftaustausch ausgeschlossen werden, ebenso andere Kreise. Jeder Kreis wird einzeln behandelt. Damit jeder Kreis einzeln behandelt werden kann, ist es notwendig, jeden Kreis mit einem eigenen Vorratsbehälter auszustatten. Dadurch entsteht ein entsprechender Aufwand. Wenn ein Druckluftverbrauch in einem Kreis stattfindet, wird dies von der Steuerelektronik erkannt und es schließt sich ein Nachfüllen dieses Kreises an. Durch entsprechende Programmierung der Steuerelektronik kann die Erstbefüllung, die Aufeinanderfolge der Befüllung der Kreise, die Einstellung unterschiedlicher Betriebsdrücke, der Ausgleich unterschiedlichen Druckluftverbrauchs in den Kreisen sowie das Wiederauffüllens der Kreise in weiten Grenzen variiert werden. Durch entsprechende Programmierung der Steuerelektronik kann die Arbeitsweise des Kompressors gesteuert werden. Es kann die kinetische Energie des Fahrzeugs im Schiebebetrieb genutzt werden, um einen Kreis auf ein höheres Druckniveau aufzufüllen als es dem Betriebsdruck dieses Kreises entspricht. Durch Luftaustausch mit diesem Kreis kann ein anderer Kreis bedient werden. Durch die Einzelsteuerung jedes Kreises und den Einsatz elektronischer Mittel für jeden einzelnen Steuerungsvorgang erhöht sich die Anzahl der Schaltungen erheblich. Dies ist nachteilig für die Lebensdauer der Überströmventile, Sperrventile und der Magnetventile. Die Einzelsteuerung erhöht auch in nachteiliger Weise die Schalthäufigkeit des Druckreglers und die Anzahl der Schaltungen des Lastlauf/Leerlaufzyklusses und damit die Lebensdauer des Kompressors. Bei Ausfall der oder einem Defekt in der Spannungsversorgung der Steuerelektronik ergibt sich ein Totalausfall der Druckluftaufbereitungseinrichtung und der Druckluftbeschaffungsanlage. Ist ein Luftaustausch zwischen einzelnen oder allen Kreisen beabsichtigt, so müssen hierzu die betreffenden Sperrventile der Kreise geöffnet werden. Dann aber geht gespeicherte Druckluft über die das Rückschlagventil vor der Zentralbelüftung überbrückende Leitung mit Drossel verloren, zumindest während einer Leerlaufphase, obwohl zu diesem Zeitpunkt eine Regeneration nicht beabsichtigt ist. Weiterhin ist nachteilig, dass bei Spannungsausfall, sei es infolge eines eintretenden Defektes oder durch Ausschalten der Zündung des Kraftfahrzeuges, alle angeschlossenen Kreise bis auf den Schließdruck der Überströmventile entleert werden. Die notwendige Wiederbefüllung erfordert zusätzliche Kompressorarbeit.

### AUFGABE DER ERFINDUNG

Der Erfindung liegt die Aufgabe zugrunde, ein Verfahren zum Betreiben einer Druckluftbeschaffungsanlage sowie eine solche Druckluftbeschaffungsanlage bereitzustellen, die Kreise mit unterschiedlichen Druckhöhen hat und bei der der Kompressor bei Luftverbrauch in Kreisen mit nicht maximaler Druckhöhe nicht gegen den maximalen Druck fördern muss.

Die Anzahl der elektrisch von der Steuerelektronik generierten Schaltungen für die Überströmventile, Sperrventile und dergleichen sollen möglichst gering gehalten werden, um die Lebensdauer der Druckluftbeschaffungsanlage und der Druckluftaufbereitungseinrichtung hoch zu halten.

### LÖSUNG

Erfindungsgemäß wird dies bei einem Verfahren zum Betreiben einer einen Kompressor, einen Druckregler, ein Mehrkreisschutzventil aufweisenden Druckluftbeschaffungsanlage mit den im Anspruches 1 angegebenen Merkmalen dadurch erreicht, dass die mehreren Verbraucherkreise mit den unterschiedlichen Druckhöhen steuerungstechnisch in mindestens zwei Steuerungsgruppen unterteilt bzw. zusammengefasst werden, von denen die eine Steuerungsgruppe den Kreis mit der maximalen Druckhöhe umfasst oder aufweist, während die andere Steuerungsgruppe den Kreis mit der minimalen Druckhöhe umfasst oder aufweist. Der Kompressor wird zwischen Leerlaufphase und Lastlaufphase über den Druckregler und ein zugehöriges Auslassventil von einem von der Steuerelektronik generierten Signal entsprechend dem Luftverbrauch in den beiden gebildeten im Steuerungsgruppen geschaltet.

### BESCHREIBUNG DER ERFINDUNG

Während bisher alle Kreise auch dann, wenn sie unterschiedliche Druckhöhen in den einzelnen Vorratsbehältern der Kreise vorsahen, über die Zentralbelüftung nach dem Rückschlagventil einheitlich als eine Steuerungsgruppe oder in Einzelsteuerung behandelt wurden und nur durch Überströmventile, Druckbegrenzer, Schaltventile und dergleichen unterschieden wurden, sieht die neue Erfindung vor, an der beschriebenen Stelle mindestens zwei Steuerungsgruppen zu bilden, die in unterschiedlicher Weise Einfluss auf die Steuerung des Druckreglers und dann auch des Kompressors nehmen. Die eine Steuerungsgruppe umfasst auf jeden Fall den Kreis, in welchem die maximale Druckhöhe vorrätig gehalten werden muss. Bei diesem Kreis kann es sich insbesondere um die Versorgung einer Luftfederung des Kraftfahrzeugs handeln, wobei die Druckhöhe insbesondere in der Größenordnung von 12 bis 15 bar liegen kann. Es ist ohne weiteres möglich, dass diese Steuerungsgruppe nur diesen einen Kreis V aufweist. In einem solchen Falle umfasst die andere Steuerungsgruppe die Betriebsbremskreise der Kreise I und II, den Kreis III zur Versorgung der Anhängerbremse sowie der Feststellbremse und den Kreis IV zur Versorgung der Nebenverbraucher. In den Betriebsbremskreisen kann ein Druck von 12 bar gewünscht bzw. festgelegt sein. Der Kreis III kann 8,5 bar aufweisen. Die Nebenverbraucher am Kreis IV können beispielsweise 10 bar erfordern. In der Regel genügt eine Unterteilung der einzelnen Kreise in zwei Steuerungsgruppen, wie beschrieben. Es ist jedoch auch möglich, mehr als zwei Steuerungsgruppen zu bilden, um bereichsweise eine noch weitergehendere Unterteilung zu bekommen. Sinn der Bildung dieser Steuerungsgruppen ist es, den Kompressor unterschiedlich zu betreiben, je nach dem, in welchem der Kreise der Steuerungsgruppen ein Luftverbrauch anfällt. So genügt es in vielen Fällen, die maximale Druckhöhe von z. B. 15 bar in dem Vorratsbehälter des Kreises V vor oder bei Antritt einer Fahrt einmalig zur Verfügung zu stellen und abzuspeichern. Der Kompressor muss also für diese eine Fahrt nur einmal gegen diesen hohen Druck von 15 bar arbeiten. Während der Fahrt möge kein Luftverbrauch an der Luftfeder eintreten, sondern nur der übliche Luftverbrauch zum Betätigen der Bremsen und der Nebenverbraucher. In diesem Falle wird also der Kompressor hinsichtlich seiner Lastlaufphase und Leerlaufphase so gesteuert, dass er während der Fahrt maximal gegen einen Druck von 12 bar der Kreise I und II arbeiten muss. Der höchste Druck in den Kreisen, die durch die Steuergruppe gebildet wird, die den maximalen Druck nicht umfasst, steuert in diesem Fall den Druckregler und damit den Kompressor, wobei durch Überströmventile mit begrenzter Rückströmung sichergestellt ist, dass alle Kreise dieser Steuerungsgruppe bedient werden. Es ist aber auch möglich, sämtliche Kreise dieser Steuerungsgruppe durch je einen Drucksensor in der jeweiligen zu einem Vorratsbehälter führenden Versorgungsleitung zu überwachen und aus den Signalen dieser Drucksensoren Einfluss auf die Steuerung des Druckreglers zu nehmen. Innerhalb jeder Steuerungsgruppe, die mehr als einen Kreis aufweist, ist ein Luftaustausch möglich.

Sinn dieser Betriebsweise ist es auch, die Anzahl der Schaltungen der Magnetventile, der Überströmventile oder sonstiger Betätigungselemente zu reduzieren, um damit die Langlebigkeit der Anlage zu fördern. Ein mehrfaches Hin- und Herschalten von Magnetventilen, Sperrventilen und dergleichen zum annäherungsweisen Erreichen eines entsprechenden Druckniveaus wird damit vermieden. Es ist auch beabsichtigt, die Anzahl der Schaltungen, die durch die Steuerelektronik ausgelöst werden, zu reduzieren, also in den einzelnen Steuergruppen, insbesondere in der Steuergruppe, die die minimale Druckhöhe umfasst, verlässlich arbeitende mechanisch-pneumatische Elemente zu belassen bzw. anzuordnen, die ohne elektronische Schaltimpulse zu erfordern eine Verteilung von Druckluft in unterschiedlichen Druckhöhen auf die einzelnen Kreise ermöglichen. Die mechanisch-pneumatischen Elemente erbringen auch bei Ausfall oder Defekt der Spannungsversorgung eine sinnvoll nutzbare Funktion.

Um einen Luftaustausch zwischen mehreren zu einer Gruppe zusammengefassten Kreisen ohne Druckluftverlust zu ermöglichen, ist es bedeutsam, dass in der das Rückschlagventil vor der Zentralbelüftung überbrückenden Umgehungsleitung ein Regenerationsventil vorgesehen ist. Das Regenerationsventil sollte stromlos eine Sperrstellung einnehmen und nur zu Zwecken der Regeneration in eine Durchgangsstellung überführbar sein. Damit ist es möglich, dass eine Regeneration nur bei Bedarf auf Anforderung durch die Steuerelektronik stattfindet. Der gewollte Luftaustausch zwischen Kreisen einer Gruppe ist nicht zwangsläufig mit einem Luftverlust in die Atmosphäre verbunden. Bei Spannungsausfall, insbesondere bei abgestelltem Fahrzeug, wird ein Luftverlust bis auf den Schließdruck der Überströmventile sowie der vergleichsweise erhöhte Energiebedarf bei einer Wiederbefüllung der Kreise vermieden.

Die an den Ausgängen zu Vorratsbehältern der einzelnen Kreise anstehenden höchsten Drücke zumindest der Steuerungsgruppe mit der maximalen Druckhöhe und der Steuerungsgruppe mit der minimalen Druckhöhe werden jeweils gemessen und zur Steuerung des Lastund Leerlaufzyklus des Kompressors genutzt. Damit wird ein zugelassener Luftaustausch zwischen den Kreisen einer Steuerungsgruppe vorteilhaft genutzt. Auch der Bauaufwand erniedrigt sich, indem nicht mehr jeder Kreis mit je einem Drucksensor versehen sein muss.

In der die minimale Druckhöhe umfassenden Steuergruppe von Kreisen erfolgt die Aufteilung der in der Lastlaufphase vom Kompressor geförderten Druckluft auf die einzelnen Kreise unter Einsatz von mechanisch-pneumatischen Ventilen, insbesondere von Überströmventilen, Druckbegrenzern, Schaltventilen und/oder Rückschlagventilen und dergleichen. Derartig mechanisch-pneumatische Ventile kommen mit wenigen Schaltimpulsen aus und besitzen große Zuverlässigkeit und Langlebigkeit.

Ein Luftaustausch zwischen der die maximale Druckhöhe umfassenden Steuerungsgruppe und der die minimale Druckhöhe umfassenden Steuerungsgruppe wird verhindert. Es ist also nicht beabsichtigt, einen Luftaustausch zwischen dem Kreis mit der maximalen Druckhöhe und den anderen Kreisen zuzulassen. Eine solche Steuerung würde einen Luftverbrauch in dem Kreis mit der maximalen Druckhöhe vortäuschen und damit wiederum dazu zwingen, den Kompressor erneut gegen die maximale Druckhöhe zu betreiben.

Die Druckluftaufbereitungseinrichtung ist Bestandteil einer Druckluftbeschaffungsanlage, die ihrerseits einen Kompressor aufweist. Die Druckluftaufbereitungseinrichtung weist einen Druckregler, einen Lufttrockner, ein Mehrkreisschutzventil und eine Steuerelektronik auf, die in einer gemeinsamen Baueinheit zusammengefasst sein können. Die Druckluftaufbereitungseinrichtung kann auch ein Regenerationsventil aufweisen. Innerhalb dieser gemeinsamen Baueinheit sind den einzelnen Kreisen zugeordnete mechanisch-pneumatische Ventile, insbesondere Überströmventile mit begrenzter Rückströmung, Druckbegrenzer, Schaltventile und/oder Rückschlagventile oder dergleichen vorgesehen. Erfindungsgemäß wird dies durch die Merkmale des Anspruchs 5 erreicht.
Dabei die Kreise durch ein oder mehrere Elemente steuerungstechnisch in mindestens zwei Steuerungsgruppen unterteilt, von denen die eine Steuerungsgruppe den Kreis mit der maximalen Druckhöhe umfasst oder aufweist, während die andere Steuerungsgruppe den Kreis mit der minimalen Druckhöhe umfasst oder aufweist. Der Kompressor wird zwischen Leerlaufphase und Lastlaufphase über den Druckregler und ein zugehöriges Auslassventil von einem von der Steuerelektronik generierten Signal entsprechend dem Luftverbrauch in den beiden gebildeten Steuerungsgruppen geschaltet. Da der überwiegende Luftverbrauch während der Fahrt in den Kreisen I und II auftritt, die die Betriebsbremse versorgen, kann der Kompressor mit einem Abschaltdruck am Ende der Lastlaufphase betrieben werden, der niedriger liegt als der maximale Druck der Luftfederanlage. Dies schont den Kompressor und verbessert die Langlebigkeit der Elemente der Anlage. Freilich muss irgendwann auch der Vorratsbehälter mit der maximalen Druckhöhe aufgefüllt oder nachgefüllt werden. Dies geschieht jedoch in vergleichsweise größeren zeitlichen Abständen und nur bei Bedarf, so dass der normale Verschleiß des Kompressors begrenzt wird. In Verbindung damit wird der Kompressor in der Regel auf niedrigerem Druckniveau betrieben bzw. gehalten und ist an den Druckluftverbrauch in der Steuerungsgruppe von Kreisen angepasst, die die maximale Druckhöhe nicht aufweisen.

Die Aufbereitungseinrichtung ist mit einem oder mehreren Elementen in einem oder mehreren der Kreise so ausgestattet, dass steuerungstechnisch mindestens zwei Steuerungsgruppen auf ganz verschiedene Art und Weise erreicht werden. Eine vergleichsweise einfache Ausführungsform entsteht dann, wenn die die steuerungstechnische Unterteilung bewirkende Elemente in der Versorgungsleitung des Kreises V, also des Kreises mit der maximalen Druckhöhe, ein Überströmventil mit begrenzter Rückströmung und ein Rückschlagventil sind. Die Reihenfolge dieser beiden Ventile in der Versorgungsleitung ist beliebig. Das Rückschlagventil ist so eingebaut, dass es auf jeden Fall einen Luftaustausch zu Kreisen der anderen Steuerungsgruppe verhindert. Das Rückschlagventil speichert die einmal erreichte maximale Druckhöhe in dem zugeordneten Vorratsbehälter verlässlich ab, so dass die dort gespeicherte Luft ausschließlich für diesen Zweck eingesetzt wird, nicht aber zum Luftaustausch.

Es ist aber auch möglich, in der Versorgungsleitung, die von der Zentralbelüftung nach dem Rückschlagventil abzweigt, ein Sperrventil anzuordnen, welches eine Durchgangsstellung und eine Sperrstellung aufweist beispielsweise über ein elektrisch steuerbares Magnetventil angesteuert wird. Auch eine direkte Ansteuerung des Sperrventils über die Steuerungselektronik ist möglich. Dieses Sperrventil besitzt zweckmäßig auch eine mechanische Feder, die gewährleistet, dass das Sperrventil in stromlosem Zustand die Sperrstellung einnimmt.

Eine etwas abweichende Gruppe von Lösungen sehen als Element zur Bildung der beiden Steuerungsgruppen gleichsam eine Weiche oder ein Umschaltventil vor, welches in der Zentralbelüftung dem dort vorgesehenen Rückschlagventil unmittelbar nachgeschaltet ist. Dieses Umschaltventil besitzt zwei Stellungen, von denen die eine wiederum aufgrund der Kraft einer mechanischen Feder eingenommen wird, während die andere beispielsweise durch ein Magnetventil vorgesteuert oder auch direkt von der Steuerelektronik gesteuert werden kann. Damit ergibt sich eine Verzweigungsmöglichkeit nach dem Rückschlagventil der Zentralbelüftung und es ist die Möglichkeit eröffnet, den Kompressor mit dem Druckregler gleichsam entweder an die eine Steuerungsgruppe oder an die andere Steuerungsgruppe anzuschließen und je nach dem den oder die Kreise der einen Steuerungsgruppe oder der anderen Steuerungsgruppe je nach Bedarf zu bedienen. Es versteht sich, dass auch die Schaltspanne des Druckreglers bzw. des Kompressors je nach den Anforderungen in der einen Steuerungsgruppe oder der anderen Steuerungsgruppe unterschiedlich gewählt bzw. vorgegeben wird. Die hierzu erforderlichen Maßnahmen können in der Steuerelektronik beinhaltet sein. Damit ergibt sich bei dieser Möglichkeit der besondere Vorteil, dass in der Steuerungsgruppe, die allein den Kreis V mit der maximalen Druckhöhe bedient, sämtliche mechanisch-pneumatischen Ventile, wie Überströmventile, Rückschlagventile und dergleichen, und auch elektrisch schaltbare Ventile, z.B. Magnetventile, in Fortfall kommen können.

Es ist aber auch möglich, das Umschaltventil bzw. die Weiche so auszubilden, dass in der einen Stellung nur die Steuerungsgruppe mit der maximalen Druckhöhe und in der anderen Stellung beide Steuerungsgruppen oder alle Steuerungsgruppen bedient bzw. versorgt werden. In diesem Falle muss dann wieder die Versorgungsleitung für den Kreis V mit entsprechenden Elementen versehen sein, insbesondere mit einem Überströmventil mit begrenzter Rückströmung und einem Rückschlagventil oder einem Überströmventil ohne Rückströmung. Die Steuerungsgruppe, die den maximalen Druck nicht umfasst, kann ansonsten im Vergleich zum Stand der Technik weitgehend unverändert ausgebildet werden, d. h. es können hier Überströmventile, Druckbegrenzer, Schaltventile, auch durch Magnetventile vorgesteuerte Schaltventile und dergleichen Anwendung finden. Die vorliegende Erfindung ist auch völlig unabhängig von einer Regeneration verwirklichbar, d. h. die Steuerung kann auch so ausgebildet bzw. auf eine erforderliche Regeneration des Lufttrockners abgestimmt und eingesetzt werden.

Eine weitere Möglichkeit zur Bildung von zwei und mehr Steuerungsgruppen besteht darin, schaltbaren Überströmventilen der Kreise I und II beispielsweise ein gemeinsames Sperrventil vorzuordnen. Dieses Sperrventil weist eine Durchgangsstellung und eine Sperrstellung auf, ist durch eine mechanische Feder in die Durchgangsstellung beaufschlagt und kann z. B. elektrisch über ein Magnetventil vorgesteuert werden, um die Sperrstellung einzunehmen. Dies geschieht in Verbindung mit einem Überströmventil und einem Rückschlagventil in dem Kreis, der die maximale Druckhöhe aufweist.

Das zuvor beschriebene Sperrventil kann auch durch einen Druckbegrenzer ersetzt sein, der den steuerbaren Überströmventilen der Kreise I und II vorgeschaltet ist. Sobald der eingestellte Druck am Druckbegrenzer erreicht bzw. überschritten wird, sind nicht nur die Kreise I und II, sondern auch die Kreise III und IV ordnungsgemäß aufgefüllt. Durch die Erfassung des Druckes ausgangsseitig am Kreis V wird über die Steuerelektronik ein Signal für die Schaltung des Druckreglers erzeugt bzw. unterdrückt, welches die Leerlaufphase des Kompressors einleitet.

### KURZBESCHREIBUNG DER FIGUREN

Die Erfindung wird anhand verschiedener Ausführungsbeispiele weiter erläutert und beschrieben. Es zeigen:
- **Fig. 1**: eine erste Ausführungsform der Druckluftaufbereitungseinrichtung in Form eines Schaltplans,
- **Fig. 2**: eine zweite Ausführungsform der Druckluftaufbereitungseinrichtung in Form eines Schaltplans,
- **Fig. 3**: eine dritte Ausführungsform der Druckluftaufbereitungseinrichtung in Form eines Schaltplans,
- **Fig. 4**: eine vierte Ausführungsform der Druckluftaufbereitungseinrichtung in Form eines Schaltplans,
- **Fig. 5**: eine fünfte Ausführungsform der Druckluftaufbereitungseinrichtung in Form eines Schaltplans, und
- **Fig. 6**: eine sechste Ausführungsform der Druckluftaufbereitungseinrichtung in Form eines Schaltplans.

### FIGURENBESCHREIBUNG

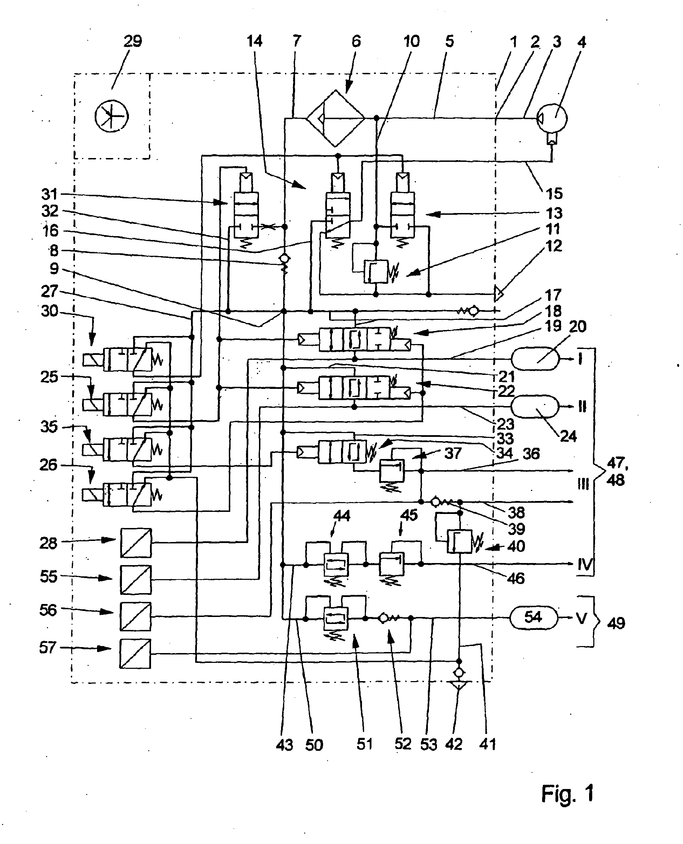

In dem in **Fig. 1** dargestellten Schaltplan sind die wesentlichen Elemente durch Symbole verdeutlicht. Es ist eine Druckluftaufbereitungseinrichtung 1 durch eine strichpunktierte Linienführung als gemeinsame Baueinheit verdeutlicht, die innerhalb eines Gehäuses die verschiedenen Elemente besitzt. Der Umriss der Druckluftaufbereitungseinrichtung 1 kann auch als Gehäuse angesehen werden. Es ist dort ein Anschluss 2 vorgesehen, an den eine Leitung 3 herangeführt ist, die von einem Kompressor 4 ausgeht. Die Leitung 3 setzt sich innerhalb einer Leitung 5 in der Druckluftaufbereitungseinrichtung 1 fort, die einerseits zu einem Lufttrockner 6 führt. Vom Lufttrockner 6 führt eine Leitung 7 zu einem Rückschlagventil 8, welches in üblicher Weise den Teil der Druckluftaufbereitungseinrichtung vor dem Rückschlagventil 8 von der nachfolgenden Zentralbelüftung 9 trennt. Die Zentralbelüftung 9 kann auch als gemeinsamer Einströmraum angesehen werden, über den die einzelnen Kreise I bis V versorgt werden.

Von der Leitung 5 führt eine Leitung 10 zu einem Sicherheitsventil 11, welches ausgangsseitig an eine Entlüftungsöffnung 12 angeschlossen ist. Es ist ein Druckregler 13 vorgesehen, der wie erkennbar eine Sperrstellung und eine Durchgangsstellung aufweist und von der Kraft einer Feder in die Sperrstellung beaufschlagt ist, während er andererseits durch ein Magnetventil in die Durchgangsstellung entsprechend der Leerlaufphase geschaltet wird. In paralleler Ansteuerung zu dem Druckregler 13 ist ein Steuerventil 14 vorgesehen, welches über eine Leitung 15 den Kompressor 4 schaltet. Über die Leitung 15 kann eine Kupplung am Kompressor 4 geschaltet werden oder beispielsweise auch eine die Luftförderung im Kompressor 4 beeinflusst werden. Das Steuerventil 14 wird aus der Zentralbelüftung 9 über eine Leitung 16 mit Druckluft versorgt.

Von der Zentralbelüftung 9 bzw. einem gemeinsamen Einströmraum führt eine Versorgungsleitung 17 zu einem gesteuerten Überströmventil 18, welches dem Kreis I zugeordnet ist. Ausgangsseitig ist die Versorgungsleitung 19 vorgesehen, die letztlich über einen Anschluss und eine entsprechende Leitung zu einem Vorratsbehälter 20 des Kreises I führt. Der Kreis II ist entsprechend ausgebildet. Es gibt hier ebenfalls eine Versorgungsleitung 21, ein gesteuertes Überströmventil 22 und eine Versorgungsleitung 23 zu dem zugehörigen Vorratsbehälter 24. Die Vorratsbehälter 20 und 24 sind den beiden Betriebsbremskreisen zugeordnet und können für eine Druckhöhe von 12 bar ausgelegt bzw. bestimmt sein.

Das gesteuerte Überströmventil 18 ist zunächst wie jedes Überströmventil mit begrenzter Rückströmung aufgebaut, d. h. es besitzt anströmseitig eine erste Wirkfläche und abströmseitig eine zweite Wirkfläche, so dass zwischen Öffnungs- und Schließdruck die übliche Hysterese entsteht. Darüber hinaus weist das Überströmventil 18 aber auch eine dritte und eine vierte Wirkfläche auf, wobei die dritte Wirkfläche pneumatisch über ein Magnetventil 25 angesteuert wird und zum Öffnen des Überströmventils 18 dient. Die vierte Wirkfläche wird über ein Magnetventil 26 angesteuert und dient zum Erreichen der Schließstellung des Überströmventils 18. Die Magnetventile 25 und 26 steuern auch das Überströmventil 22 mit dessen dritter und vierter Wirkfläche entsprechend an. Die Druckluftversorgung der Magnetventile 25 und 26 erfolgt über eine Leitung 27, die ebenfalls Verbindung zur Zentralbelüftung 9 hat. Ein Drucksensor 28 erfasst den Druck in der Versorgungsleitung 19 und damit im Vorratsbehälter 20 und gibt ein entsprechendes Spannungssignal über eine nicht dargestellte Leitung an eine Steuerelektronik 29. Es versteht sich, dass von der Steuerelektronik 29 auch entsprechende nicht dargestellte elektrische Steuerleitungen zu den übrigen Elementen, beispielsweise auch zu den Magnetventilen 25 und 26 geführt sind.

Es ist ein Magnetventil 30 vorgesehen, welches, wie dargestellt, die beiden Schaltstellungen besitzt, über die Steuerelektronik 29 angesteuert wird und seinerseits den Druckregler 13 wie auch das Steuerventil 14 pneumatisch ansteuert. Über das Magnetventil 25 wird auch ein Regenerationsventil 31 angesteuert, also gemeinsam mit der dritten Wirkfläche der Überströmventile 18 und 22. Das Regenerationsventil 31 ist in einer Umgehungsleitung 32 angeordnet, welches das Rückschlagventil 8 überbrückt und damit eine Rückströmung zwischen der Zentralbelüftung 9 und der Leitung 7 rückwärts durch den Lufttrockner 6 ermöglicht.

Auch der Kreis III weist eine Versorgungsleitung 33 auf, die von der Zentralbelüftung 9 ausgeht und zu einem Überströmventil 34 führt, welches jedoch nur drei Wirkflächen aufweist. Zur Einstellung einer Offenstellung des Überströmventils 34 ist ein Magnetventil 35 vorgesehen. Von dem Überströmventil 34 führt eine Versorgungsleitung 36 zum Kreis III, der hier unter Einsparung eines Vorratsbehälters dargestellt ist. In der Versorgungsleitung 36 ist ein Druckbegrenzer 37 enthalten, der bei Erreichen eines eingestellten Druckes, beispielsweise 8,5 bar, in die Schließstellung übergeht. Über die Versorgungsleitung 36 wird der Anhänger mit Druckluft versorgt. Von der Versorgungsleitung 36 zweigt eine Versorgungsleitung 38 ab, die der Versorgung der Handbremse zugeordnet ist. In dieser Versorgungsleitung 38 ist ein Rückschlagventil 39 in der dargestellten Richtung eingebaut. Ein Sicherheitsventil 40 führt über eine Leitung 41 zu einem Entlüftungsanschluss 42.

Von der Zentralbelüftung 9 zweigt weiterhin eine Versorgungsleitung 43 ab, die zu einem Überströmventil 44 mit nachgeschaltetem Druckbegrenzer 45 führt. Eine Versorgungsleitung 46 ist dem Kreis IV zugeordnet, an den Nebenverbraucher angeschlossen sein mögen, die zu ihrem Betrieb eine Druckhöhe von 10 bar benötigen. Die Überströmventile 18, 22, 34 und 44 sind Bestandteile eines Mehrkreisschutzventils 47 und damit einer ersten Steuerungsgruppe 48, die die Kreise I bis IV zusammenfasst. Es ist erkennbar, dass die beiden Betriebsbremskreise I und II mit dem höchsten Druck innerhalb der Steuerungsgruppe 48 versorgt werden, nämlich mit 12 bar.

Der Kreis V bildet eine zweite Steuerungsgruppe 49. Zu diesem Zweck zweigt von der Zentralbelüftung 9 eine Versorgungsleitung 50 ab, die zu einem Überströmventil 51 und einem nachgeschalteten Rückschlagventil 52 führt. Sie setzt sich in einer Versorgungsleitung 53 fort, die letztlich zu einem Vorratsbehälter 54 des Kreises V führt. Der Kreis V dient zur Versorgung einer Luftfederanlage des Kraftfahrzeugs und mag auf einen Vorratsdruck von 15 bar eingestellt sein. Die zweite Steuerungsgruppe 49 ist auf jeden Fall die Gruppe, die den maximalen Druck im Vergleich zu allen vorkommenden Vorratsdrücken umfasst oder aufweist.

Die ausgangsseitigen Drücke der verschiedenen Kreise werden durch Drucksensoren überwacht. Zur Überwachung des Ausgangsdruckes im Vorratsbehälter 24 des Kreises II ist ein Drucksensor 55 vorgesehen und in der entsprechenden Weise angeschlossen. Ein Drucksensor 56 überwacht den Ausgangsdruck in der Versorgungsleitung 36 des Kreises III. Ein Drucksensor 57 überwacht den Druck in der Versorgungsleitung 53 bzw. dem Vorratsbehälter 54 des Kreises V. Alle Drucksensoren 28, 55, 56, 57 sind durch elektrische Leitungen mit der Steuerelektronik 29 verbunden, so dass dem Druck entsprechende Spannungssignale verarbeitet werden.

Durch die Unterteilung der Elemente der einzelnen Kreise I bis V werden die beiden Steuerungsgruppen 48 und 49 gebildet. Die Elemente des Mehrkreisschutzventils 47 sind auf die Gruppe 48 konzentriert. Insoweit bildet das Überströmventil 51 und das Rückschlagventil 52 in der Versorgung des Kreises V keinen Bestandteil des Mehrkreisschutzventils. Das Rückschlagventil 52 verhindert vielmehr eine Rückströmung in die Kreise der Steuerungsgruppe 48.

Die Anlage gemäß Fig. 1 wird wie folgt betrieben:

Drucklos und stromlos befinden sich die Elemente in den dargestellten Stellungen. Nach dem Starten des Motors des Zugfahrzeugs fördert der Kompressor 4 über die Leitungen 3 und 5 Druckluft, die durch den Lufttrockner 6 getrocknet in die Leitung 7 und über das Rückschlagventil 8 in die Zentralbelüftung 9 und damit vor die geschlossenen Überströmventile der verschiedenen Kreise I bis V gelangt. Durch einen Steuerimpuls der Steuerelektronik 29 auf das Magnetventil 25 werden die Überströmventile 18 und 22 in die Offenstellung überführt. Es erfolgt eine bevorzugte Befüllung der Kreise I und II. Nach Ablauf einer gewissen Füllphase ist der Druck in den Vorratsbehältern 20 und 24 auf beispielsweise 7 bar angestiegen, welches von den Drucksensoren 28 und 55 an die Steuerelektronik 29 gemeldet wird. Sodann wird das Magnetventil 25 ausgeschaltet und das Magnetventil 35 angesteuert. Bei weiterem Druckanstieg wird in den Vorratsbehältern 20 und 24 ein Druck von 8,5 bar erreicht. Mit dem Erreichen dieses Druckes schließt der Druckbegrenzer 37, so dass im Kreis III der Druck von 8,5 bar abgesichert ist. Das Erreichen dieses Druckes wird über den Drucksensor 56 angezeigt, so dass das Magnetventil 35 wieder abgeschaltet wird. Bei weiterem Druckanstieg in der Zentralbelüftung 9 werden die Öffnungsdrücke der Überströmventile 44 und 51 erreicht, so dass diese Kreise befüllt werden. Der Druckbegrenzer 45 schließt mit Erreichen eines Druckes von 10 bar, so dass der Kompressor dann nur noch den Behälter 54 sowie die Behälter 20 und 24 weiter auffüllt. Sobald in den Behältern 20 und 24 der vorgesehene Druck von 12 bar erreicht ist, melden dies die Drucksensoren 28 und 55 der Steuerelektronik 29. Zu diesem Zeitpunkt werden die Überströmventile 18 und 22 in die Schließstellung überführt. Dies erfolgt vermittels eines Schaltimpulses über das Magnetventil 26 und die vierte Wirkfläche an den Überströmventilen 18 und 22. Es schließt sich eine weitere Druckerhöhung im Behälter 54 an, die mit dem Erreichen des vorgesehenen Druckes von 15 bar für die Luftfederung ihren Abschluss finden kann. Dies wird der Steuerelektronik 29 über den Sensor 57 gemeldet. Es folgt ein Umschalten des Magnetventils 30. In der Folge wird der Druckregler 13 in seine Durchgangsstellung überführt, so dass die Leerlaufphase eingeschaltet ist und der Kompressor 4 über den Entlüftungsanschluss 12 in die Atmosphäre fördert. Parallel dazu wird das Steuerventil 14 so geschaltet, dass ein Druckimpuls die Förderung des Kompressors 4 unterbricht. Das Magnetventil 26 wird ausgeschaltet, sodass die Überströmventile in ihre normale Offenstellung zurückkehren können und ein Luftaustausch zwischen den Kreisen I bis IV möglich wird.

Bei Bedarf kann eine Regeneration des Lufttrockners 6 erfolgen. Dies geschieht durch das Magnetventil 25, indem das Regenerationsventil 31 in die Offenstellung überführt wird und Druckluft aus den Kreisen I und II zur Regeneration benutzt wird.

Nach dem ordnungsgemäßen Befüllen der Anlage beginnt die Fahrt. Während der Fahrt tritt in der Folge von Bremsvorgängen ein Druckluftverbrauch in den Kreisen I und II auf, so dass sich der Druck in den Vorratsbehältern 20 und 24 erniedrigt, während in den übrigen Kreisen, insbesondere im Kreis V, kein Druckluftverbrauch eintreten möge. Das Magnetventil 30 wird wieder umgeschaltet. Der Druckregler 13 und das Steuerventil 14 wechseln wieder ihre Stellungen, so dass der Kompressor 4 wiederum Druckluft fördert, die über das Rückschlagventil 8 in die Zentralbelüftung 9 gelangt. Die Druckluft gelangt über die Überströmventile 18 und 22, die sich in ihrer normalen Offenstellung befinden, in die Vorratsbehälter 20 und 24, bis dort der vorgesehene Druck von 12 bar wieder erreicht wird. Die Drucksensoren 28 und 55 überwachen diese Drücke und melden das Erreichen an die Steuerelektronik 29, so dass in der Folge der Druckregler 13 und das Steuerventil 14 wieder umgeschaltet werden, so dass der Kompressor 4 seine Förderung beendet. Entsprechendes gilt bei einem Luftverbrauch in den Kreisen III und IV. Auch in diesem Falle muss der Kompressor 4 mit maximal 12 bar fördern. Der Kompressor 4 wird während dieser Phasen geschont, was sich in einer langen Lebensdauer äußert.

Bei einem Luftverbrauch in den Kreisen III und IV erfolgt ein Luftaustausch mit den Kreisen I und II, d. h. aus diesen Kreisen gelangt Druckluft über offenstehende Überströmventile in die jeweils anderen Kreise. Dadurch sinkt der Druck in den Behältern 20 und 24 und es schließt sich eine Lastlaufphase an, wie sie oben bereits beschrieben wurde.

Insbesondere durch das Anheben des Fahrzeugaufbaus über die Luftfederanlage, die am Kreis V angeschlossen ist, erfolgt ein Luftverbrauch im Vorratsbehälter 54, so dass dort der Druck abfällt. Ein solcher Druckabfall geschieht jedoch vergleichsweise seltener als ein Luftverbrauch an den Betriebsbremskreisen I und II. Der Druckabfall wird der Steuerelektronik 29 über den Drucksensor 57 mitgeteilt und es erfolgt eine Umsteuerung des Druckreglers 13, des Steuerventils 14 und des Kompressors 4 derart, dass nicht mehr die Steuerungsgruppe 48 für die Luftförderung bestimmend ist, sondern die Steuerungsgruppe 49. Sobald der Drucksensor 57 eine Druckanforderung des Vorratsbehälters 54 meldet, wird über das Magnetventil 26 die Schließstellung an den beiden Überströmventilen 18 und 22 der Kreise I und II herbeigeführt. Eine Luftabströmung in den Kreis III wird durch das geschlossene Druckbegrenzungsventil 37 verhindert, ebenso eine Befüllung des Kreises IV über das Druckbegrenzungsventil 45. Damit ist sichergestellt, dass während der nachfolgenden Füllphase die vom Kompressor geförderte Luft über die Zentralbelüftung 9 allein in den Vorratsbehälter 54 überführt wird, so dass dessen maximale Druckhöhe von 15 bar schnellstmöglich erreicht wird. Die Lastlaufphase des Kompressors 4 wird also vorteilhaft sehr kurz gehalten. Wenn weder aus der Steuerungsgruppe 48 noch aus der Steuerungsgruppe 49 ein Luftverbrauch gemeldet wird, kann eine Regenerationsphase durchgeführt werden oder der Kompressor 4 verbleibt in der Leerlaufphase.

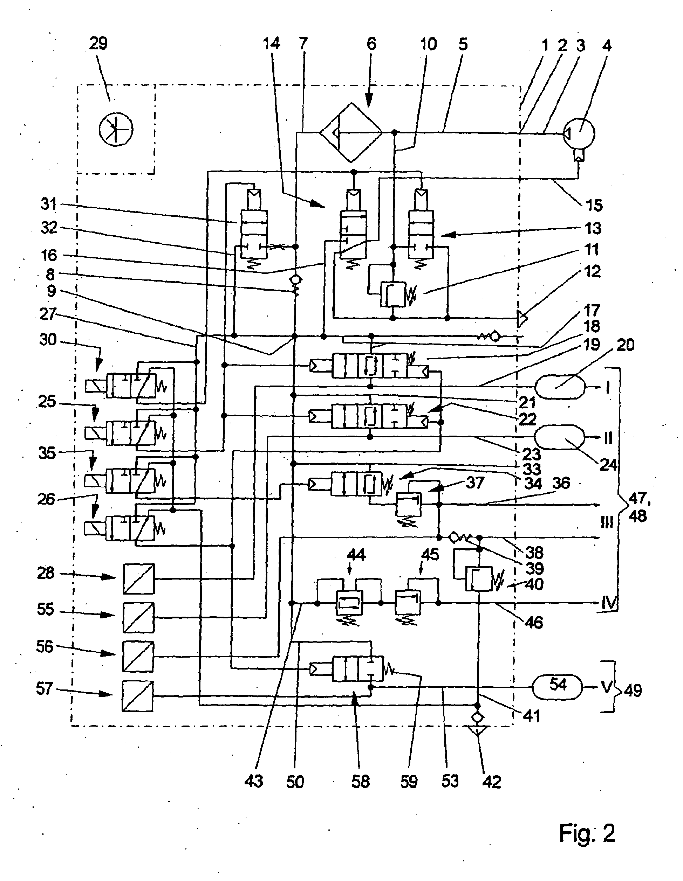

Die in **Fig. 2** dargestellte Druckluftaufbereitungsanlage ist in weiten Bereichen ähnlich wie die Anlage gemäß Fig. 1 ausgebildet, weshalb auch die dortige Beschreibung verwiesen werden kann. Sämtliche Einzelheiten bezüglich der Steuerungsgruppe 48 sind unverändert. Auch hier wird in der Steuerungsgruppe 49 nur der Kreis V erfasst. In der Versorgungsleitung 50, 53 ist hier ein Sperrventil 58 angeordnet, welches wie ersichtlich eine Sperrstellung und eine Durchgangsstellung aufweist. In stromlosem Zustand wird durch eine Feder 59 die Sperrstellung eingeschaltet. Das Magnetventil 26 schaltet nicht nur die beiden Überströmventile 18 und 22 in die Schließstellung, sondern schaltet auch das Sperrventil 58 in die Durchgangsstellung. Statt ein Sperrventil 58 mit Vorsteuerung durch das Magnetventil 26 einzusetzen, kann auch ein separates elektrisch ansteuerbares Magnetventil in der Versorgungsleitung 50, 53 vorgesehen sein, welches direkt über die Steuerelektronik 29 angesteuert wird. Das Sperrventil 58 erfüllt zugleich die Funktion des Rückschlagventils 52 der Anlage gemäß Fig. 1, d. h. in der Sperrstellung wird ein Rückfluss und ein Austausch von Druckluft zu den Überströmventilen der Steuerungsgruppe 48 verhindert.

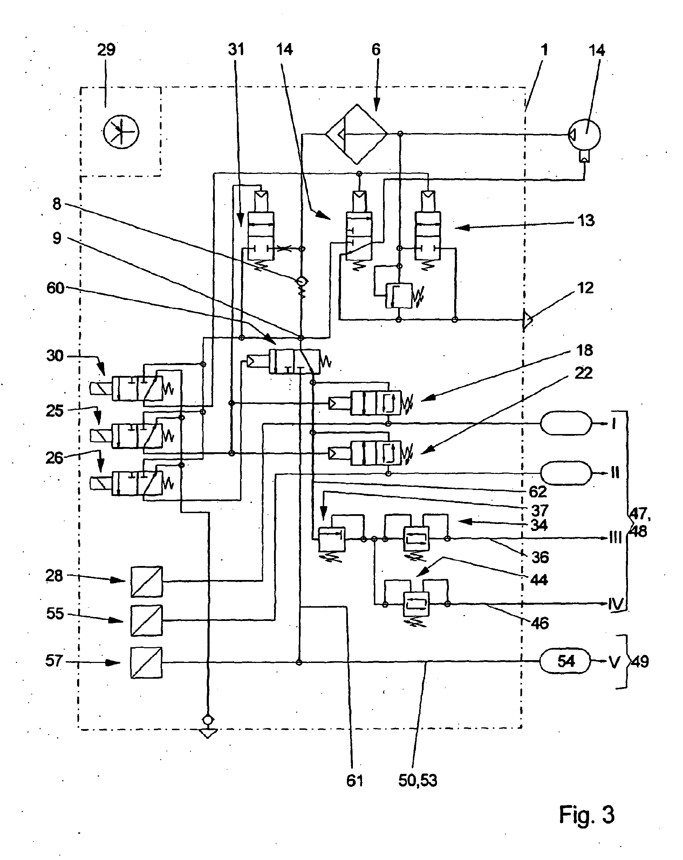

Bei der Ausführungsform gemäß **Fig. 3** wird zur Bildung der beiden Steuergruppen 48 und 49 ein Umschaltventil 60 eingesetzt, welches am Anfang der Zentralbelüftung 9 unmittelbar nach dem Rückschlagventil 8 angeordnet ist. Das Umschaltventil 60 besitzt zwei Stellungen, indem einmal die Steuerungsgruppe 48 angeschlossen und die Steuerungsgruppe 49 abgeschlossen wird sowie umgekehrt. Es genügt hier die Anordnung der Magnetventile 30, 25 und 26 sowie der Drucksensoren 28, 55 und 57. Die Überströmventile 18 und 22 besitzen hier nur drei Wirkflächen. Der Druckbegrenzer 37 ist hier gemeinsam den Kreisen III und IV zugeordnet und vor den jeweiligen Überströmventilen 34 und 44 angeordnet. In der Versorgungsleitung 50, 53, die von der Zentralbelüftung 9 über eine Leitung 61 Anschluss in der betreffenden Stellung des Umschaltventils 60 an die Zentralbelüftung 9 hat, ist kein Schaltelement angeordnet. Entsprechend führt eine Leitung 62 von dem Umschaltventil 60 zu den Elementen der Kreise I bis IV bzw. des Mehrkreisschutzventils 47. Es ist erkennbar, wie durch das Umschalten des Umschaltventils 60, welches über das Magnetventil 26 erfolgt, aber auch direkt von der Steuerelektronik 29 erfolgen kann, entweder nur die Steuerungsgruppe 48 oder die Steuerungsgruppe 49 bedient wird. Entsprechend wird auch die Lastlaufphase des Kompressors 4 festgelegt und durchgeführt. Da auch hier mit dem wesentlichen Druckluftverbrauch im Bereich der Kreise I und II zu rechnen ist, wird der Kompressor 4 auf dieser vergleichsweise niedrigeren Druckstufe betrieben. Nur hin und wieder muss der Behälter 54 mit dem maximalen Druck aufgefüllt werden.

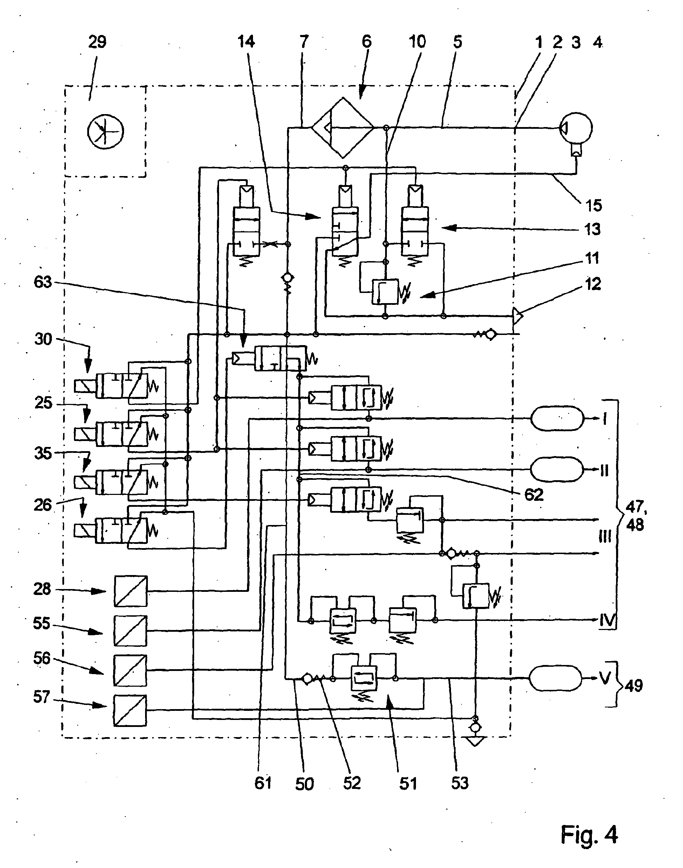

Das Ausführungsbeispiel der **Fig. 4** schließt an die vorangehend beschriebenen Ausführungsbeispiele an. Nach dem Rückschlagventil 8 ist am Anfang der Zentralbelüftung ein Umschaltventil 63 vorgesehen. Auch das Umschaltventil 63 besitzt zwei Stellungen, wie dargestellt. In der einen Stellung wird nur die Leitung 61 bedient, in der anderen Stellung sind gleichzeitig die Leitungen 61 und 62 angeschlossen. Dabei ist in der Versorgungsleitung 50, 53 des Kreises V die Anordnung des Überströmventils 51 und des Rückschlagventils 52 erforderlich. Das Rückschlagventil 52 ist hier stromauf des Überströmventils 51 angeordnet. Auch auf diese Art und Weise werden wiederum die beiden Steuerungsgruppen 48 und 49 gebildet. Auch hier weist die Steuerungsgruppe 48 die vier Kreise I, II, III und IV auf, während die zweite Steuerungsgruppe auch nur den Kreis V aufweist. Es ist erkennbar, dass die einzelnen Kreise auch in anderer Weise zu zwei oder auch zu mehreren Steuerungsgruppen 48 und 49 zusammengefasst sein können. Die eine Steuerungsgruppe 48 ist so aufgebaut, dass sie die Versorgung des maximalen Druckes auslässt und sich im Wesentlichen nach dem höchsten vorkommenden Druck innerhalb der durch die Steuerungsgruppe 48 zusammengefassten Kreise richtet, während die zweite Steuerungsgruppe 49 auf jeden Fall den Kreis umfasst, der den maximalen Druck aufweist. Es ist aber auch möglich, im Bereich der Steuerungsgruppe 49 mehrere Kreise zusammenzufassen.

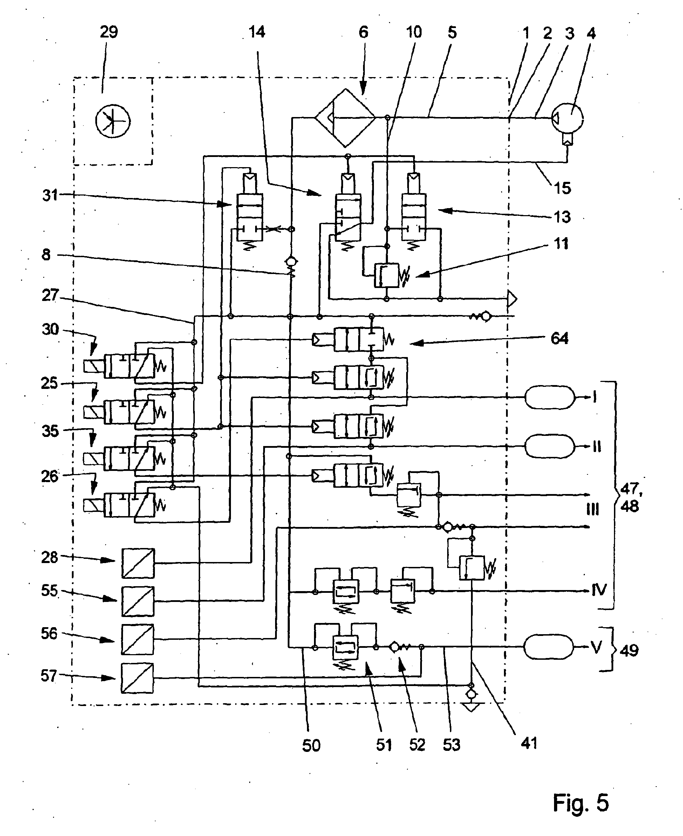

Die Anlage gemäß **Fig. 5** weist ein Sperrventil 64 auf, welches einerseits an die Stelle der Umschaltventile 60 bzw. 63 tritt und andererseits die Funktion der Sperrstellung der Überströmventile 18 und 22 der Anlage gemäß Fig. 1 erbringt. Auch hier ist es erforderlich, zur Bildung der Steuerungsgruppe 49 in der Versorgungsleitung 50, 53 ein Überströmventil 51 und ein Rückschlagventil 52, gleich in welcher Reihenfolge, anzuordnen. Der Kreis III und der Kreis IV sind hier wieder in Übereinstimmung mit der Ausführungsform der Fig. 1 aufgebaut.

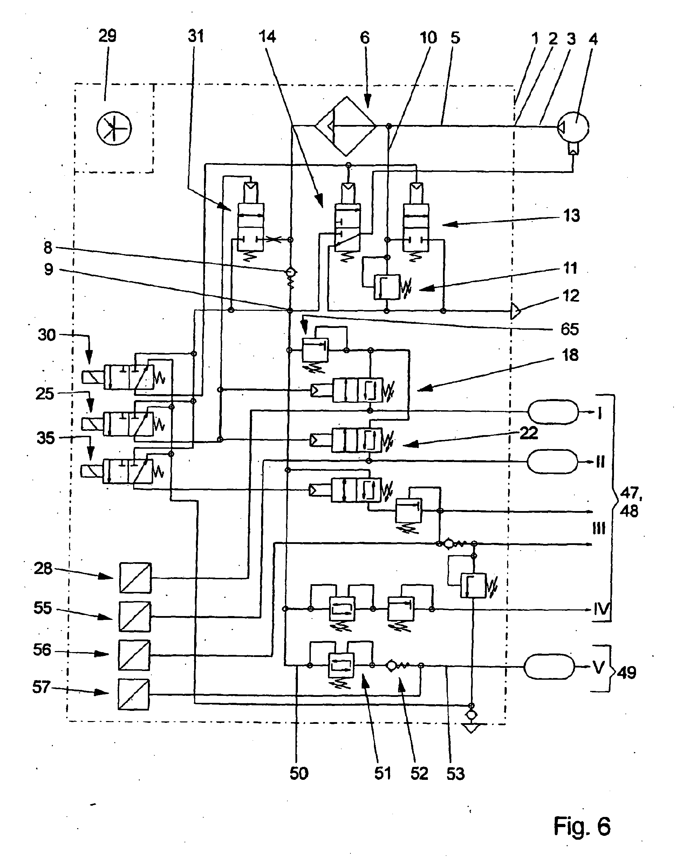

Die Ausführungsform der **Fig. 6** weist die Besonderheit auf, dass den beiden Überströmventilen 18 und 22 der Kreise I und II ein gemeinsamer Druckbegrenzer 65 vorgeschaltet ist. Die Anlage ist ansonsten so aufgebaut, wie dies bereits Fig. 5 zeigt. Auch hier sind die beiden Steuerungsgruppen 48 und 49 gebildet, und zwar durch das Überströmventil 51 und das Rückschlagventil 52. Das Magnetventil 26 kann hier in Fortfall kommen. Die Betriebsweise des Kompressors 4 unter Bildung der beiden Steuerungsgruppen 48 und 49 ist aus den vorangehenden Ausführungen überschaubar. Obwohl bei allen Ausführungsformen die Steuerungsgruppe 49 nur einen Kreis aufweist, ist leicht vorstellbar, dass die Steuerungsgruppe auch mehrere Kreise ausweisen kann, wie dies für die Steuerungsgruppe 48 gezeigt ist.

### BEZUGSZEICHENLISTE

- 1: Druckluftaufbereitungseinrichtung
- 2: Anschluss
- 3: Leitung
- 4: Kompressor
- 5: Leitung
- 6: Lufttrockner
- 7: Leitung
- 8: Rückschlagventil
- 9: Zentralbelüftung
- 10: Leitung

- 11: Sicherheitsventil
- 12: Entlüftungsöffnung
- 13: Druckregler
- 14: Steuerventil
- 15: Leitung
- 16: Leitung
- 17: Versorgungsleitung
- 18: gesteuertes Überströmventil
- 19: Versorgungsleitung
- 20: Vorratsbehälter

- 21: Versorgungsleitung
- 22: gesteuertes Überströmventil
- 23: Versorgungsleitung
- 24: Vorratsbehälter
- 25: Magnetventil
- 26: Magnetventil
- 27: Leitung
- 28: Drucksensor
- 29: Steuerelektronik
- 30: Magnetventil

- 31: Regenerationsventil
- 32: Umgehungsleitung
- 33: Versorgungsleitung
- 34: Überströmventil
- 35: Magnetventil
- 36: Versorgungsleitung
- 37: Druckbegrenzer
- 38: Versorgungsleitung
- 39: Rückschlagventil
- 40: Sicherheitsventil

- 41: Leitung
- 42: Entlüftungsanschluss
- 43: Versorgungsleitung
- 44: Überströmventil
- 45: Druckbegrenzer
- 46: Versorgungsleitung
- 47: Mehrkreisschutzventil
- 48: Steuerungsgruppe
- 49: Steuerungsgruppe
- 50: Versorgungsleitung

- 51: Überströmventil
- 52: Rückschlagventil
- 53: Versorgungsleitung
- 54: Vorratsbehälter
- 55: Drucksensor
- 56: Drucksensor
- 57: Drucksensor
- 58: Sperrventil
- 59: Feder
- 60: Umschaltventil

- 61: Leitung
- 62: Leitung
- 63: Umschaltventil
- 64: Sperrventil
- 65: Druckbegrenzer

## Patentansprüche

1. Verfahren zum Betreiben einer einen Kompressor, einen Druckregler (13) und ein Mehrkreisschutzventil (47) aufweisenden Druckluftbeschaffungsanlage eines Kraftfahrzeugs, an die mehrere Verbraucherkreise (I, II, III, IV, V) mit zumindest teilweise unterschiedlichen Druckhöhen anschließbar sind, indem der Kompressor (4) zwischen Leerlaufphase und Lastlaufphase über den Druckregler (13) und ein zugehöriges Auslassventil von einem von einer Steuerelektronik (29) generierten Signal je nach dem Luftverbrauch in den einzelnen Verbraucherkreisen geschaltet wird, **dadurch gekennzeichnet, dass** die mehreren Verbraucherkreise (I, II, III, IV, V) mit den unterschiedlichen Druckhöhen durch ein oder mehrere Elemente steuerungstechnisch in mindestens zwei Steuerungsgruppen (48, 49) unterteilt bzw. zusammengefasst werden, von denen die erste Steuerungsgruppe (48) mehrere Kreise (z.B. I, II, III, IV) einschließlich den Kreis (z.B. III) mit der minimalen Druckhöhe und die zweite Steuerungsgruppe (49) den Kreis (z.B. V) mit der maximalen Druckhöhe umfasst oder aufweist, wobei bei Druckluftverbrauch in einem Kreis der ersten Steuerungsgruppe (48) der Kreis mit der höchsten Druckhöhe (z.B. I, II) dieser Steuerungsgruppe (48), die den Kreis (z.B. V) der zweiten Steuerungsgruppe (49) mit der maximalen Druckhöhe nicht umfasst, den Druckregler (13) und damit den Kompressor (4) steuert, und dass der Kompressor (4) zwischen Leerlaufphase und Lastlaufphase über den Druckregler (13) und das zugehörige Auslassventil von einem von der Steuerungselektronik (29) generierten Signal unterschiedlich geschaltet wird, je nach dem, in welchem der Kreise der Steuerungsgruppen (48, 49) ein Luftverbrauch vorliegt.

2. Verfahren nach Anspruch 1, **dadurch gekennzeichnet, dass** die an Ausgängen zu Vorratsbehältern der einzelnen Verbraucherkreise (I, II; V) anstehenden höchsten Drücke zumindest der ersten Steuerungsgruppe (48) mit der minimalen Druckhöhe und der zweiten Steuerungsgruppe (49) mit der maximalen Druckhöhe jeweils gemessen und zur Steuerung des Lastlauf-Leerlaufzyklusses des Kompressors (4) genutzt werden.

3. Verfahren nach Anspruch 1 oder 2, **dadurch gekennzeichnet, dass** in der die minimale Druckhöhe umfassenden ersten Steuerungsgruppe (48) von Verbraucherkreisen (I, II, III, IV) die Aufteilung der in der Lastlaufphase vom Kompressor (4) geförderten Druckluft auf die einzelnen Verbraucherkreise unter Einsatz von mechanisch-pneumatischen Ventilen, insbesondere von Überströmventilen, Druckbegrenzern, Schaltventile und/oder Rückschlagventilen und dergleichen erfolgt.

4. Verfahren nach einem oder mehreren der Ansprüche 1 bis 3, **dadurch gekennzeichnet, dass** ein Luftaustausch zwischen der die maximale Druckhöhe umfassenden zweiten Steuerungsgruppe (49) und der die minimale Druckhöhe umfassenden ersten Steuerungsgruppe (48) verhindert wird.

5. Druckluftaufbereitungseinrichtung für eine einen Kompressor aufweisende Druckluftbeschaffungsanlage eines Kraftfahrzeuges, mit einem Druckregler (13), einem Lufttrockner (6), einem Mehrkreisschutzventil (47) und einer Steuerelektronik (29), die eine gemeinsame Baueinheit bilden, wobei innerhalb der gemeinsamen Baueinheit den einzelnen Verbraucherkreisen zugeordnete mechanisch-pneumatische Ventile, insbesondere Überströmventile, Druckbegrenzer, Schaltventile und/oder Rückschlagventile und dgl. vorgesehen sind, **dadurch gekennzeichnet, dass** die Verbraucherkreise durch ein oder mehrere Elemente steuerungstechnisch in mindestens zwei Steuerungsgruppen (48, 49) unterteilt sind, von denen die erste Steuerungsgruppe (48) mehrere Kreise (z.B. I, II. III. IV) einschließlich den Kreis (z.B. III) mit der minimalen Druckhöhe und die zweite Steuerungsgruppe (49) den Kreis (z.B. V) mit der maximalen Druckhöhe umfasst oder aufweist, wobei bei Druckluftverbrauch in einem Kreis der ersten Steuerungsgruppe (48) der Kreis mit der höchsten Druckhöhe (z.B. I, II) dieser Steuerungsgruppe (48), die den Kreis (z.B. V) der zweiten Steuerungsgruppe (49) mit der maximalen Druckhöhe nicht umfasst, den Druckregler (13) und damit den Kompressor (4) steuert, und dass der Kompressor (4) zwischen Leerlaufphase und Lastlaufphase über den Druckregler (13) und das zugehörige Auslassventil von einem von der Steuerungselektronik (29) generierten Signal unterschiedlich geschaltet wird, je nach dem, in welchem der Kreise der Steuerungsgruppen (48, 49) ein Luftverbrauch vorliegt.

6. Druckluftaufbereitungseinrichtung nach Anspruch 5, **dadurch gekennzeichnet, dass** das die steuerungstechnische Unterteilung in mindestens zwei Steuerungsgruppen (48, 49) bewirkende Element ein Überströmventil (51) und ein Rückschlagventil (52) in der zu dem Kreis (z.B. V) der zweiten Steuerungsgruppe (49) mit der maximalen Druckhöhe führenden Versorgungsleitung (50, 53) umfasst.

7. Druckluftaufbereitungseinrichtung nach Anspruch 5, **dadurch gekennzeichnet, dass** das die steuerungstechnische Unterteilung in mindestens zwei Steuerungsgruppen (48, 49) bewirkende Element ein Sperrventil (58) in der zu dem Kreis (z.B. V) der zweiten Steuerungsgruppe (49) mit der maximalen Druckhöhe führenden Versorgungsleitung (50, 53) umfasst.

8. Druckluftaufbereitungseinrichtung nach Anspruch 5, **dadurch gekennzeichnet, dass** das die steuerungstechnische Unterteilung in mindestens zwei Steuerungsgruppen (48, 49) bewirkende Element ein dem die Zentralbelüftung (9) definierenden Rückschlagventil (8) nachgeschaltetes Umschaltventil (60 oder 63) umfasst.

9. Druckluftaufbereitungseinrichtung nach Anspruch 5 und 6, **dadurch gekennzeichnet, dass** das die steuerungstechnische Unterteilung in mindestens zwei Steuerungsgruppen (48, 49) bewirkende Element ein Sperrventil (64) umfasst, das den Überströmventilen (18, 22) der Kreise (I, II) vorgeordnet ist.

10. Druckluftaufbereitungseinrichtung nach Anspruch 5 und 6, **dadurch gekennzeichnet, dass** das die steuerungstechnische Unterteilung in mindestens zwei Steuerungsgruppen (48, 49) bewirkende Element einen Druckbegrenzer (65) umfasst, der den Überströmventilen (18, 22) der Kreise (I, II) vorgeordnet ist.

## Claims

1. Method to operate a pressurized air processing unit of a vehicle, the unit including a compressor, a pressure regulator (13) and a multi circuit protection valve (47) and being arranged to be connected to a plurality of consumer circuits (I, II, III, IV, V) two of which having at least different pressure levels, the compressor (4) being controlled between the idle phase and the pumping phase by the pressure regulator (13) and an assigned outlet valve via a signal generated by an electronic control unit (29) in response to the air consumption in the several consumer circuits, **characterized in that** the consumer circuits (I, II, III, IV, V) having the different pressure levels by one or more elements are separated and combined respectively into at least two control groups (48, 49), the first one (48) of which including a number of circuits (for example I, II, III, IV) among them the circuit (for example III) having the minimum pressure level and the second control group (49) including the circuit (for example V) having the maximum pressure level, the circuit having the maximum pressure level (for example I, II) of this control group (48) not including the circuit (for example V) of the second control group (49) having the maximum pressure level controlling the pressure regulator (13) and thus the compressor (4) during consumption of pressurized air in one of the circuits of the first control group (48), and **in that** the compressor (4) is controlled between the idle phase and the pumping phase by the pressure regulator (13) and an assigned outlet valve via a signal generated by an electronic control unit (29) in a different way in response to the air consumption in the several circuits of the control groups (48, 49).

2. Method of claim 1, **characterized in that** the highest pressures being present on the outlet conduits leading to reservoirs of the consumer circuits (I, II; V) of at least the first control group (48) having the minimum pressure level and of the second control group (49) having the maximum pressure level are separately measured and used to control the idle phase and the pumping phase of the compressors (4).

3. Method of claim 1 or 2, **characterized in that** the measuring out of the compressed air conveyed in the pumping phase to the several consumer circuits on the first control group (48) of the consumer circuits (I, II, III, IV) having the minimum pressure level is performed using mechanical-pneumatic valves, especially overflow valves, pressure limiting valves, control valves and/or check valves and the like.

4. Method of one or more of the claims 1 to 3, **characterized in that** an exchange of pressurized air between the second control group (49) having the maximum pressure level and the first control group (48) having the minimum pressure level is prevented.

5. Processing unit to treat pressurized air of a device of a vehicle, the device generating the pressurized air and including a compressor, the unit including a common building block of a pressure regulator (13), an air dryer (6), a multi circuit protection valve (47) and an electronic control unit (29), the building block including mechanical-pneumatic valves assigned to the several consumer circuits, especially overflow valves, pressure limiting valves, control valves and/or check valves and the like, **characterized in that** the consumer circuits are separated and combined into at least two control groups (48, 49) with respect of controlling by one or more elements, the first control group (48) includes a number of circuits (for example I, II, III, IV) among them the circuit (for example III) having the minimum pressure level and the second control group (49) including the circuit (for example V) having the maximum pressure level, the circuit having the maximum pressure level (for example I, II) of this control group (48) not including the circuit (for example V) of the second control group (49) having the maximum pressure level controlling the pressure regulator (13) and thus the compressor (4) during consumption of pressurized air in one of the circuits of the first control group (48), and **in that** the compressor (4) is controlled between the idle phase and the pumping phase by the pressure regulator (13) and an assigned outlet valve via a signal generated by the electronic control unit (29) in a different way in response to the air consumption in the several circuits of the control groups (48, 49).

6. Processing unit of claim 5, **characterized in that** the element separating and combining the two control groups (48, 49) comprises an overflow valve (51) and a check valve (52) arranged in the conduit (50, 53) leading to the circuit (for example V) of the second control group (49) having the maximum pressure level.

7. Processing unit of claim 5, **characterized in that** the element separating and combining the two control groups (48, 49) comprises a closing valve (58) arranged in the conduit (50, 53) leading to the circuit (for example V) of the second control group (49) having the maximum pressure level.

8. Processing unit of claim 5, **characterized in that** the element separating and combining the two control groups (48, 49) comprises a change-over valve (60 or 63) arranged downstream the check valve (8) defining the central pressurized air supply (9).

9. Processing unit of claims 5 and 6, **characterized in that** the element separating and combining the two control groups (48, 49) comprises a closing valve (64) arranged upstream the overflow valves (18, 22) of the circuits (I, II).

10. Processing unit of claims 5 and 6, **characterized in that** the element separating and combining the two control groups (48, 49) comprises a pressure limiting valve (65) arranged upstream the overflow valves (18, 22) of the circuits (I, II).

## Revendications

1. Procédé d'exploitation d'une installation de production d'air comprimé comportant un compresseur, un régulateur de pression (13) et une soupape de protection multicircuit (47), d'un véhicule automobile, à laquelle peuvent être raccordés plusieurs circuits (I, II, III, IV, V) des récepteurs avec des hauteurs de pression au moins partiellement différentes, en ce que le compresseur (4) est commuté entre la phase de ralenti et la phase de fonctionnement sous charge, par l'intermédiaire du régulateur de pression (13) et une soupape d'échappement correspondante, par un signal généré par une électronique de commande (29), suivant la consommation d'air dans les différents circuits des récepteurs, **caractérisé en ce que** les circuits (I, II, III, IV, V) des récepteurs avec les différentes hauteurs de pression sont, par un ou plusieurs éléments, divisés ou réunis sur le plan de la technique de commande en au moins deux groupes de commande (48, 49) dont le premier groupe de commande (48) comprend ou comporte plusieurs circuits (par exemple I, II, III, IV) comprenant le circuit (par exemple III) avec la hauteur de pression minimale, et le deuxième groupe de commande (49) comprend ou comporte le circuit (par exemple V) avec la hauteur de pression maximale, qu'on utilise de l'air comprimé dans un circuit du premier groupe de commande (48) commandant le circuit avec la hauteur de pression la plus élevée (par exemple I, II) de ce groupe de commande (48) qui ne comporte pas le circuit (par exemple V) du deuxième groupe de commande (49) ave la hauteur de pression maximale, le régulateur de pression (13) et le compresseur (4), et **en ce que** le compresseur (4) est commandé différemment, entre la phase de ralenti et la phase de fonctionnement sous charge, par l'intermédiaire du régulateur de pression (13) et la soupape d'échappement correspondante, par un signal généré par l'électronique de commande (29), suivant le circuit des groupes de commande (48, 49) dans lequel on a une consommation d'air.

2. Procédé selon la revendication 1, **caractérisé en ce que** les pressions maximales, s'appliquant aux sorties vers les réservoirs des différents circuits (I, II ; V) des récepteurs, au moins du premier groupe de commande (48) avec la hauteur de pression minimale et du deuxième groupe de commande (49) avec la hauteur de pression maximale, sont mesurées chacune et utilisées pour la commande du cycle fonctionnement sous charge-ralenti du compresseur (4).

3. Procédé selon la revendication 1 ou 2, **caractérisé en ce que** dans le premier groupe de commande (48), comprenant la hauteur de pression minimale, des circuits (I, II, III, IV) des récepteurs, il se produit la répartition de l'air comprimé, produit par le compresseur (4) en phase de fonctionnement sous charge, entre les différents circuits des récepteurs, avec utilisation de soupapes mécaniques et pneumatiques, en particulier de soupapes de trop-plein, de limiteurs de pression, de soupapes de commutation et/ou de clapets de non-retour et similaires.

4. Procédé selon une ou plusieurs des revendications 1 à 3, **caractérisé en ce qu'**on empêche un échange d'air entre le deuxième groupe de commande (49) présentant la hauteur de pression maximale et le premier groupe de commande (48) présentant la hauteur de pression minimale.

5. Dispositif de traitement d'air comprimé pour une installation de production d'air comprimé comportant un compresseur, d'un véhicule automobile, avec un régulateur de pression (13), un sécheur d'air (6), une soupape de protection multicircuit (47) et une électronique de commande (29) lesquels forment une unité de construction commune; à l'intérieur de l'unité de construction commune étant prévues des soupapes mécaniques et pneumatiques associées aux différents circuits des récepteurs, en particulier des soupapes de trop-plein, des limiteurs de pression, des soupapes de commutation et/ou des clapets de non-retour et similaires, **caractérisé en ce que** les circuits des récepteurs sont divisés sur le plan de la technique de commande, par un ou plusieurs éléments, en au moins deux groupes de commande (48, 49) dont le premier groupe de commande (48) comprend ou comporte plusieurs circuits (par exemple I, II, III, IV) comprenant le circuit (par exemple III) avec la hauteur de pression minimale, et le deuxième groupe de commande (49) comprend ou comporte le circuit (par exemple V) avec la hauteur de pression maximale, qu'on utilise de l'air comprimé dans un circuit du premier groupe de commande (48) commandant le circuit avec la hauteur de pression la plus élevée (par exemple I, II) de ce groupe de commande (48) qui ne comporte pas le circuit (par exemple V) du deuxième groupe de commande (49) ave la hauteur de pression maximale, le régulateur de pression (13) et le compresseur (4)" entre la phase de ralenti et la phase de fonctionnement sous charge, par l'intermédiaire du régulateur de pression (13) et la soupape d'échappement correspondante, par un signal généré par l'électronique de commande (29), suivant le circuit des groupes de commande (48, 49) dans lequel on a une consommation d'air.

6. Dispositif de traitement d'air comprimé selon la revendication 5, **caractérisé en ce que** l'élément provoquant la division sur le plan de la technique de commande en au moins deux groupes de commande (48, 49) comprend une soupape de trop-plein (51) et un clapet de non-retour (52) dans la conduite d'alimentation (50, 53) menant au circuit (par exemple V) du deuxième groupe de commande (49) présentant la hauteur de pression maximale.

7. Dispositif de traitement d'air comprimé selon la revendication 5, **caractérisé en ce que** l'élément provoquant la division, sur le plan de la technique de commande, en au moins deux groupes de commande (48, 49) comprend une soupape d'arrêt (58) dans la conduite d'alimentation (50, 53) menant au circuit (par exemple V) du deuxième groupe de commande (49) présentant la hauteur de pression maximale.

8. Dispositif de traitement d'air comprimé selon la revendication 5, **caractérisé en ce que** l'élément provoquant la division, sur le plan de la technique de commande, en au moins deux groupes de commande (48, 49) comprend une soupape de commutation (60 ou 63) couplée en aval du clapet de non-retour (8) définissant l'aération centrale (9).

9. Dispositif de traitement d'air comprimé selon les revendications 5 et 6, **caractérisé en ce que** l'élément provoquant la division, sur le plan de la technique de commande, en au moins deux groupes de commande (48, 49), comprend une soupape d'arrêt (64) qui est disposée en amont des soupapes de trop-plein (18, 22) des circuits (I, II).

10. Dispositif de traitement d'air comprimé selon les revendications 5 et 6, **caractérisé en ce que** l'élément provoquant la division, sur le plan de la technique de commande, en au moins deux groupes de commande (48, 49), comprend un limiteur de pression (65) qui est disposé en amont des soupapes de trop-plein (18, 22) des circuits (I, II).
